# EUROPÄISCHE PATENTSCHRIFT

(11) **EP 3 424 767 B1**
(45) Veröffentlichungstag und Bekanntmachung des Hinweises auf die Patenterteilung: **19.08.2020**
(21) Anmeldenummer: 18175056.3
(22) Anmeldetag: 30.05.2018
(51) Int. Cl.: B60L 1/00, H02J 7/02, H02J 50/10

(54) **KRAFTFAHRZEUG**
MOTOR VEHICLE
VÉHICULE AUTOMOBILE

(30) Priorität: 05.07.2017 DE 102017211418
(43) Veröffentlichungstag der Anmeldung: 09.01.2019
(73) Patentinhaber: VOLKSWAGEN AKTIENGESELLSCHAFT, 38440 Wolfsburg (DE)
(72) Erfinder: Lühr, Kord, 38302 Wolfenbüttel (DE); Penshorn, Gerd, 31234 Edemissen (DE); Brückner, Claus-Peter, 38104 Braunschweig (DE); Ortner, Andreas, 29399 Wahrenholz (DE); Ulrich, Per, 38108 Braunschweig (DE); Haupt, Hannes, 38108 Braunschweig (DE); Bartels, Bastian, 38442 Wolfsburg (DE)

(56) Entgegenhaltungen:
- CN-U- 204 334 047
- US-A1- 2010 075 655
- US-A1- 2015 048 927
- Bmw: "Manual Smartphone Cradle", , 31. März 2016 (2016-03-31), XP055526219, Gefunden im Internet: URL:https://www.bmw-motorrad.ca/content/da m/bmwmotorradnsc/common/downloads/smartpho ne_cradle/Manual_Smartphone_Cradle.pdf.ass et.1489147654563.pdf [gefunden am 2018-11-22]
- Anonymous: "Zubehör für das beste TV-Erlebnis unterwegs", , 12 October 2016 (2016-10-12), pages 1-4, XP055614644, Retrieved from the Internet: URL:https://www.promobil.de/tv-spezial-fer nseh-zuebhoer-macht-fernsehen-im-wohnmobil -erst-perfekt/ [retrieved on 2019-08-22]
- Anonymous: "Charging devices - Voltage and Amperage", , 4 April 2012 (2012-04-04), pages 1-2, XP055614690, Retrieved from the Internet: URL:https://electronics.stackexchange.com/ questions/29259/charging-devices-voltage-a nd-amperage/328834 [retrieved on 2019-08-22]

## Beschreibung

Die vorliegende Erfindung betrifft ein Kraftfahrzeug, welches mit einem elektrischen Türschließmechanismus, einem funkbasiertem Empfänger zum Empfang eines Zugangsberechtigungscodes und einer Ladevorrichtung zum Laden eines elektrischen Signalgebers ausgestattet ist. Ferner betrifft die Erfindung ein Verfahren, mit dem unter Nutzung des offenbarten Kraftfahrzeuges ein Signalgeber zur Öffnung des Kraftfahrzeuges aufgeladen werden kann.

Funkbasierte, elektrische Türschließmechanismen sind in Kraftfahrzeugen heutzutage als Standard anzusehen. Gleichzeitig wird in vielen Kraftfahrzeugen auf das traditionelle, mechanische Zündschloss verzichtet und durch einen einfachen Start-/Stopp-Knopf ersetzt.

Mit dem Entfall des traditionellen Zündschlosses ist auch der mechanische Schlüssel entbehrlich. Stattdessen werden zum Türöffnen und -schließen elektrische Signalgeber eingesetzt.

Diese Signalgeber waren ursprünglich in den mechanischen Schlüssel integriert. Zwischenzeitlich finden jedoch auch andere Bauformen, z.B. scheckkartenähnliche Signalgeber Verwendung.

Zusätzlich weisen die eingesetzten Signalgeber häufig ergänzende Funktionalitäten auf, die über das eigentliche Öffnen und Schließen des Kraftfahrzeuges hinausgehen. So lassen sich in derartigen Signalgebern Informationen zur Personalisierung des Kraftfahrzeuges abspeichern. Nach dem Öffnen des Kraftfahrzeuges können damit ausgewählte Parameterzum Beispiel die Einstellung der Sitze - bereits auf den Schlüssel und damit den Benutzer angepasst werden.

Zukünftige Lösungen sehen vor, dass zum Öffnen des Kraftfahrzeuges auf einen speziellen, kraftfahrzeugspezifischen Signalgeber vollständig verzichtet wird. Stattdessen werden Mobiltelefongeräte verwendet, insbesondere Smartphones, die mit Hilfe einer speziellen Software ausgestattet sind. Diese Software ermöglicht die Generierung eines Zugangsberechtigungscodes mit anschließender Übertragung an das Kraftfahrzeug. Typischerweise wird die Software in Form einer sogenannten App realisiert. Damit übernimmt das Mobiltelefongerät die Funktionalität des Signalgebers.

Unabhängig von der Ausführung des Signalgebers kann im täglichen Betrieb das Problem auftreten, dass der Signalgeber einen unzureichenden Ladezustand zum Öffnen des Kraftfahrzeuges aufweist. Es muss daher nach einer Lösung gesucht werden, mit deren Hilfe der Fahrer trotz des Ausfalls des funkbasierten Signalgebers in das Kraftfahrzeug gelangen kann.

In Schrift DE 10 2006 021 172 wird hierfür ein mechanischer Schlüssel offenbart, der in den elektronischen Schlüssel integriert ist. Im Notfall wird der Not-Schlüssel aus dem eigentlichen Schlüssel entnommen. Über ein konventionelles, mechanisches Schloss kann das Kraftfahrzeug anschließend geöffnet werden.

Eine ähnliche Lösung ist in der Schrift DE 10 2007 014 179 vorgeschlagen. Auch hier wird ein mechanischer Notschlüssel offenbart. Jedoch ist die Anordnung des mechanischen Schlüssels in dem Gehäuse des elektronischen Schlüssels sowie die vorgesehene Arretierung abweichend zur DE 10 2006 021 172. Damit wird eine verbesserter Halt des Notschlüssels in dem Schlüsselgehäuse erreicht, so dass auch im Falle eines Herunterfallens der Notschlüssel nicht herausfällt.

In der Schrift DE 10 2013 009 070 wird eine mechanische Lösung für eine Notentriegelung eines Kraftfahrzeuges vorgeschlagen. Im Falle eines Ausfalls des elektronischen Schlüssels kann über eine Bewegung des Außenspiegels eine Entriegelung der zugeordneten Tür erreicht werden. Hierzu ist der Außenspiegel mittels eines Bowdenzuges mit dem Türschloss verbunden. Wird der Spiegel in eine definierte Position bewegt, z.B. nach vorne, entriegelt das korrespondierende Türschloss.

In der Schrift US 8947202 B2 wird eine Lösung zur Öffnung eines Kraftfahrzeuges mit Hilfe eines Smartphones als Signalgeber beschrieben. Hierzu wird eine bluetooth-basierte Verbindung zwischen dem Smartphone und dem Kraftfahrzeug hergestellt, wobei als vorteilhafte Ausgestaltung eine Lösung mit einer Authentifizierung unter Verwendung eines zweiten Smartphones dokumentiert ist. Eine Lösung für den Fall, dass das erste Smartphone und/oder das zweite Smartphone einen unzureichenden Ladezustand aufweisen, wird nicht offenbart.

In der DE 10 2014 104 032 A1 wird ein Mobiler Identifikationsgeber für ein Sicherheitssystem zu einer schlüssellosen Aktivierung einer Schließvorrichtung, insbesondere für ein Zugangssystem eines Kraftfahrzeuges, mit einem Gehäuse offenbart, in welchem zumindest eine Elektronikeinheit mit einem Energiespeicher und einem Kommunikationsmodul zur Verbindung mit der Schließvorrichtung angeordnet ist.

In der DE10 2016 106 371 A1 wird ein Funksystem für ein Fahrzeug beschrieben, aufweisend eine Fahrzeug-Antennenvorrichtung zum Senden von Daten und/oder Energie zu einer Fahrzeugschlüssel-Antennenvorrichtung und wenigstens eine resonante Koppelspule, wobei die resonante Koppelspule der Fahrzeug-Antennenvorrichtung derart räumlich zugeordnet ist, dass die Fahrzeugschlüssel-Antennenvorrichtung mit der wenigstens einen resonanten Koppelspule beim Senden der Daten und/oder der Energie von der Fahrzeug-Antennenvorrichtung zu der Fahrzeugschlüssel-Antennenvorrichtung in Wirkverbindung steht. Ferner wird ein Fahrzeug mit dem erfindungsgemäßen Funksystem beschrieben.

In der DE 11 2013 000 504 T5 wird ein System offenbart, das Zugang zu einem Fahrzeug ermöglicht, wenn die Hauptbatterie nicht in der Lage ist, ausreichend Energie zur Betätigung der elektrischen Fahrzeugverriegelung zu liefern. Das System umfasst eine Zugangsvorrichtung zum Identifizieren eines berechtigten Benutzers des Fahrzeugs, ein im Fahrzeug positioniertes Mittel zum Authentifizieren der Fernzugangsvorrichtung, ein im Fahrzeug positioniertes Mittel zum Platzieren der elektrischen Verriegelung in einen verriegelten oder einen entriegelten Zustand im Anschluss an die Authentifizierung der Fernzugangsvorrichtung durch das Authentifizierungsmittel, ein im Fahrzeug positioniertes Mittel zur Übertragung von Energie von einer externen Energieversorgung zu dem Authentifizierungsmittel und zu dem Mittel zum Platzieren der elektrischen Verriegelung in einen verriegelten oder einen entriegelten Zustand, und eine externe Energieversorgung, die mit dem Energieübertragungsmittel verbunden werden kann, um das Authentifizierungsmittel und das Mittel zum Platzieren der elektrischen Verriegelung in einen verriegelten oder einen entriegelten Zustand mit Energie zu versorgen, um dadurch die Authentifizierung der Fernzugangsvorrichtung und das Entriegeln/Verriegeln des Fahrzeuges zu bewirken.

In der DE 10 2011 121 310 A1 wird ein Fahrzeugsystem offenbart, umfassend mindestens ein elektrisches Zusatzgerät sowie eine elektronische Kontrolleinheit eines Kraftfahrzeuges, welche derart ausgebildet ist, einen Ladezustand des mindestens einen elektrischen Zusatzgerätes zu überwachen, worin das mindestens eine elektrische Zusatzgerät einen elektrischen Energiespeicher zum Speichern von Energie zum Betreiben des mindestens einen elektrischen Zusatzgerätes aufweist und die elektronische Kontrolleinheit des Kraftfahrzeuges eine Energie-Erfassungseinrichtung zum Erfassen eines Ladezustandes des Energiespeichers des mindestens einen elektrischen Zusatzgerätes und eine mit der Energie-Erfassungseinrichtung gekoppelte Auswerteeinheit zum Vergleichen des Ladezustandes des Energiespeichers des mindestens einen elektrischen Zusatzgerätes mit einem vorgegebenen Wert für den Ladezustand und zum Erzeugen eines Warnsignals, falls der Ladezustand des Energiespeichers des mindestens einen elektrischen Zusatzgerätes kleiner als der vorgegebene Wert für den Ladezustand ist, aufweist, wobei das mindestens eine elektrische Zusatzgerät im aktiven Zustand mit der elektronischen Kontrolleinheit des Kraftfahrzeuges über eine drahtlose Kommunikationsverbindung kommuniziert.

In der US 2015/0048927 A1 wird ein passives schlüsselloses Zugangssystem beschrieben. Das Zugangssystem umfasst ein Zugangspunktmodul und ein Smartphone zum Übertragen eines Identifikations- und Annäherungssignals. Das Zugangssystem ermöglicht es dem Benutzer, die Entfernung zum Aktivieren des passiven Auslösens des Verriegelungsmechanismus unter Verwendung einer Anzeige der Funksignalstärke des Smartphones zu programmieren oder einzustellen.

In der US 2010/0075655 A1 wird ein Verfahren zum Steuern von Systemen eines Fahrzeuges mit einem Mobiltelefon beschrieben. Das Mobiltelefon ist über eine Benutzerschnittstelle mit dem Fahrzeug verbunden. Zwischen dem Fahrzeug und dem Mobiltelefon wird eine drahtlose Verbindung hergestellt und es wird eine Entfernung wird zwischen dem Mobiltelefon und dem Fahrzeug ermittelt. Abhängig von der Entfernung können die Schlösser des Fahrzeuges entriegelt werden.

Die Schrift CN 204334047 U offenbart das Laden einer Batterie eines Signalgebers zum Öffnen eines Fahrzeugs von innerhalb des Fahrzeugs.

Anonym: "Manual Smartphone Cradle", 31. März 2016, URL:https://www.bmw-motorrad.ca/content/dam/bmwmotorradnsc/common/downloads/smartphone_cradle/ Manual_Smartphone_Cradle.pdf.asset.1489147654563.pdf offenbart eine Smartphone Ladevorrichtung für ein Motorrad und Anonym: "Zubehör für das beste TV-Erlebnis unterwegs", 12. Oktober 2016, Seiten 1-4, URL:https://www.promobil.de/tv-spezial-fernseh-zuebhoer-machtfernsehen-im-wohnmobil-erst-perfekt/ eine Außensteckdose für ein Wohnmobil.

Trotz der beschriebenen bekannten Lösungen besteht weiterhin die Aufgabe, eine kostengünstige Lösung zu finden, die ein Öffnen eines Kraftfahrzeuges ermöglicht, auch wenn der elektronische Signalgeber aufgrund eines zu geringen Ladezustandes nicht in der Lage ist, den zum Öffnen notwendigen Zugangsberechtigungscode zu erzeugen und zu übertragen. Diese Aufgabe stellt sich insbesondere bei Verwendung eines Mobiltelefongerätes oder Smartphones als Signalgeber.

Erfindungsgemäß wird diese Aufgabe durch ein Kraftfahrzeug gemäß Anspruch 1 gelöst. Vorteilhafte Ausgestaltungen der Erfindung werden durch die Ansprüche 2 bis 7 beschrieben. Zusätzlich wird in den Ansprüchen 8 bis 15 das notwendige Verfahren offenbart, mit dessen Hilfe das erfindungsgemäße Kraftfahrzeug auch bei ungenügendem Ladezustand des Signalgebers geöffnet werden kann.

Der mit der offenbarten Lösung erzielbare technische Effekt besteht darin, ein mit einem elektrisch betätigbaren, funkbasierten Türschließmechanismus ausgestattetes Kraftfahrzeug zu beschreiben, das bei unzureichendem Ladezustand des Signalgebers eine Lademöglichkeit bereithält, so dass nach Entnahme eines Mindestmenge an elektrischer Energie das Kraftfahrzeug geöffnet werden kann.

Das in der Erfindung beschriebene Kraftfahrzeug weist einen elektrischen Türschließmechanismus, einen funkbasierten Signalempfänger und mindestens eine Steuereinheit auf. Nähert sich ein Fahrer dem Kraftfahrzeug, so verschafft er sich typischerweise durch das Betätigen eines Signalgebers Zugang zu dem Kraftfahrzeug. Als Signalgeber kommen neben den bekannten Funkschlüsseln insbesondere Mobiltelefongeräte in Form von Smartphones zum Einsatz. Smartphones gewinnen in diesem Zusammenhang zunehmend an Bedeutung. Sie können mit einer entsprechenden Softwareapplikation als digitale Schlüssel ertüchtigt werden und so die Funktion des Signalgebers übernehmen.

Stellt der Fahrer fest, dass der Ladezustand des Signalgebers unzureichend ist, ist ihm der Zugang zunächst nicht möglich. Als Lösung schlägt die Erfindung eine in/oder am Kraftfahrzeug angebrachte Ladeeinrichtung vor, die von außen zugänglich ist. Erfindungsgemäß ist diese Ladeeinrichtung mit dem Signalgeber elektrisch verbindbar. Eine im Kraftfahrzeug befindliche Steuereinheit ist dergestalt ausgeführt, dass sie den Ladevorgang bis zum Erreichen eines für das Öffnen des Kraftfahrzeuges ausreichenden Ladezustandes steuern kann.

In einer bevorzugten Ausgestaltung der Erfindung ist die Ladeeinrichtung nach dem Funktionsprinzip der Induktion ausgeführt. Hierzu sind an gut zugänglichen Stellen des Kraftfahrzeuges Spulen verbaut. Zum Laden kann der Signalgeber auf eine der Spulen gelegt werden. Bevorzugte Stellen für die Anordnung einer solchen Spule befinden sich insbesondere im Bereich der Schwarztönung der Frontscheibe oder hinter entsprechenden Karosserieteilen.

In einer alternativen Ausgestaltung der Erfindung wird die Verbindung zwischen der Ladeeinrichtung und dem Signalgeber mittels eines Kabels hergestellt. Dieses Kabel wird in bevorzugter Weise vor Umwelteinflüssen geschützt in einem Kabelfach angeordnet. Mit Hilfe eines Steckers ist das Ladekabel bei Bedarf mit dem Signalgeber verbindbar.

In einer vorteilhaften Ausgestaltung ist die mindestens eine Steuereinheit dergestalt ausgeführt, dass sie eine Autorisierung des Signalgebers ermöglicht. Abhängig von der Art des Signalgebers sind hier unterschiedliche Autorisierungstechniken möglich. Insbesondere geeignet sind passive Transponder. Wird ein solcher Transponder in die Nähe der Ladeeinrichtung gebracht, erkennt die Steuereinheit, dass der Signalgeber zum Laden Autorisiert ist. Im Sinne der Erfindung wäre hierbei sowohl eine Lösung, bei der der Transponder als eigenständige Einheit z.B. in Form eines Schlüsselanhängers ausgeführt ist als auch eine Lösung, bei der der Transponder dauerhaft in oder an dem Signalgeber angebracht wird. Handelt es sich bei dem Signalgeber um ein Mobiltelefongerät, z.B. ein Smartphone, wäre als geeignete Lösung ein im Inneren des Gerätes angeordneter Transponder möglich.

In der Erfindung ist die mindestens eine Steuereinheit dergestalt ausgeführt, dass sie eine Begrenzung der aus dem Bordnetz des Kraftfahrzeuges entnehmbaren Energiemenge ermöglicht. Hierzu können unterschiedliche Entnahmestrategien in der Steuereinheit hinterlegt sein. In einer rein zeitbasierten Entnahmestrategie wird nach einem definierten Zeitraum die Entnahme beendet. Ein neuer Ladezyklus kann erst nach einer gewissen Wartezeit gestartet werden, wobei in bevorzugter Weise die Pause zwischen zwei Ladezyklen mit jedem Zyklus länger wird. In einer alternativen Ausführungsform wird die entnehmbare Energiemenge gesteuert. Nach Erreichen einer vordefinierten Menge wird der Ladezyklus beendet. Auch hier kann in bevorzugter Ausgestaltung ein neuer Ladezyklus erst nach Ablauf einer definierten Wartezeit gestartet werden.

In einer weiteren vorteilhaften Ausgestaltung der Erfindung ist die Steuereinheit so gestaltet, dass vor dem Start des Ladevorgangs die im Bordnetz des Kraftfahrzeuges verbleibende Spannung geprüft werden kann (Selbstschutz). Hierzu besitzt die Steuerung eine Funktion zur Überwachung der Bordnetzspannung. Sollte diese einen vordefinierten Wert unterschreiten, wird das externe Laden nicht freigegeben oder abgebrochen.

In einer weiteren vorteilhaften Ausgestaltung der Erfindung ist in der Steuereinheit eine Funktion zur Ausgabe von Statusmeldungen implementiert. Derartige Statusmeldungen können insbesondere nach einem erfolgreichen Kontaktieren des Signalgebers, einer erfolgreichen Autorisierung sowie dem Beenden oder Unterbrechen eines Ladevorgangs ausgebbar sein.

Nachfolgend werden die erfindungsgemäße Vorrichtung sowie das mit dieser Vorrichtung ausführbare Verfahren anhand eines bevorzugten Ausführungsbeispiels unter Bezugnahme auf die beigefügten Zeichnungen näher erläutert. Darin zeigen:
Fig. 1: Signalgeber in Form eines Smartphones ausgestattet mit einer Schlüssel-App
Fig. 2: Aufbau eines Kraftfahrzeuges mit Anordnungsoptionen für die Spulen zum induktiven Laden
Fig. 3: Frontansicht eines Kraftfahrzeuges mit einer optionalen Anordnung eines Kabels als Verbindung zu dem Signalgeber
Fig. 4: Detailansicht einer Kabelvorrichtung zur Verbindung des Signalgebers
Fig. 5: Verfahren zum Einsatz der Ladevorrichtung

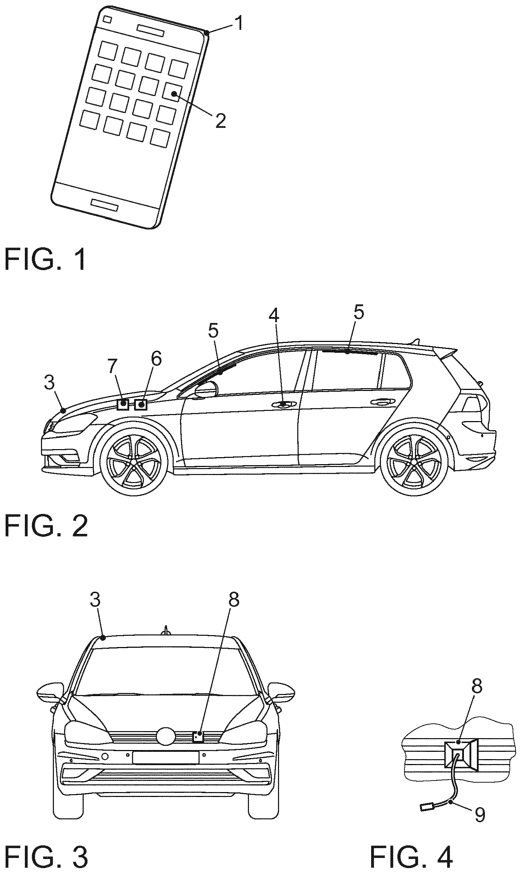

Fig. 1 zeigt ein handelsübliches Smartphone 1, das als Signalgeber zum Öffnen des Kraftfahrzeuges genutzt werden soll. Auf diesem Gerät ist eine entsprechende App 2 installiert, die als digitaler Schlüssel fungiert. Neben dem eigentlichen Öffnen und Schließen des Kraftfahrzeuges ist diese App in der Lage, Zusatzfunktionen auszuführen (z.B. die Übermittlung personalisierter Informationen zum Voreinstellen von Kraftfahrzeugfunktionen oder -einstellungen).

Fig. 2, 3 und 4 zeigen den Aufbau des Kraftfahrzeuges sowie bevorzugte Anordnungsvarianten für die Ladeeinrichtung.

In Fig. 2 ist eine Lösung dargestellt, bei der das Kraftfahrzeug 3 mehrere Spulen 5 zum induktiven Laden eines Smartphones 1 besitzt. Die Spulen 5 sind in bevorzugter Weise im Bereich der Schwarztönung der Windschutzscheibe oder hinter geeigneten, nicht metallischen Karosserieteilen angebracht.

In Fig. 3 und 4 ist eine alternative Anordnung für die Ladevorrichtung offenbart. Hier ist für die Verbindung des Signalgebers 1 mit der Ladevorrichtung ein Ladekabel 9 vorgesehen. Dieses Ladekabel ist bevorzugter Weise hinter einer Klappe in einem Ladekabelfach 8 angeordnet, um es vor Witterungseinflüssen zu schützen.

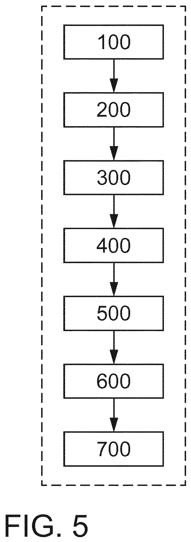

Mit Bezug auf Fig. 5 wird nachfolgend das Verfahren beschrieben, das mit Hilfe der offenbarten Vorrichtung ausführbar ist.

Ausgangspunkt für das Verfahren ist die Annäherung des Fahrers an sein Kraftfahrzeug 3 und sein Wunsch, dieses mit Hilfe des Signalgebers 1 zu öffnen. Stellt der Fahrer fest, dass das Signalgeber 1 nicht ausreichend geladen ist bzw. sich möglicherweise bereits vollständig abgeschaltet hat, schlägt die Öffnung des Kraftfahrzeuges 3 fehl. Um dennoch in das Kraftfahrzeug 3 gelangen zu können, ist ein Nachladen notwendig.

Abhängig von Art und Ausstattung des Signalgebers 1 bieten sich unterschiedliche Handlungsalternativen an. Handelt es sich um ein Mobiltelefongerät 1 und weist dieses eine Einrichtung zum induktiven Laden auf, nähert er sich in einem ersten Verfahrensschritt 100 mit dem Gerät einer der vorhandenen Ladespulen 5 bzw. legt es auf die entsprechende Fläche. Alternativ öffnet er ein Ladekabelfach 8 und verbindet das Mobiltelefongerät in dem Verfahrensschritt 100 mit dem darin verborgenen Ladekabel.

Ist der Kontakt hergestellt, wird in einem Schritt 200 dem Nutzer zunächst ein Statussignal ausgegeben. Dieses zeigt ihm an, dass der notwendige elektrische Kontakt hergestellt ist. In einem weiteren Verfahrensschritt 300 erfolgt die Autorisierung des Signalgebers 1. Ist diese erfolgreich und weist das Bordnetz des Kraftfahrzeuges 1 eine ausreichende Spannung für einen Ladevorgang auf, wird in Schritt 400 in einer bevorzugten Ausgestaltung ein entsprechendes Statussignal ausgegeben.

Der Start des Ladevorgangs erfolgt in dem Schritt 500. Auch dieser Verfahrensschritt wird dem Benutzer in Schritt 600 in einer bevorzugten Ausgestaltung durch Ausgabe eines Statussignals angezeigt.

Nach Ablauf der Ladezeit bzw. nach Übertragen einer definierten Energiemenge wird der Ladevorgang beendet (Schritt 700). In einem weiteren Verfahrensschritt 800 wird dieses Ende dem Benutzer in der bevorzugten Ausgestaltung durch ein entsprechendes Statussignal angezeigt, das durch die Steuereinheit 6 ausgegeben wird.

Nach Abschluss des Ladevorgangs besteht die Möglichkeit zum Öffnen des Kraftfahrzeuges 3. Sollte der Ladezustand des Signalgebers 1 noch nicht ausreichen, kann durch ein Trennen und erneutes Verbinden des Signalgebers 1 der Vorgang erneut gestartet werden.

### Bezugszeichenliste

- 1: Mobiltelefongerät (Signalgeber)
- 2: Softwareapplikation (App)
- 3: Kraftfahrzeug
- 4: Türschließmechanismus
- 5: Spule
- 6: Signalempfänger
- 7: Steuereinheit
- 8: Ladekabelfach
- 9: Ladekabel
- 100: Kontaktierung des Signalgebers
- 200: Ausgabe eines Statussignals
- 300: Autorisierung
- 400: Ausgabe eines Statussignals
- 500: Starten des Ladevorgangs
- 600: Ausgabe eines Statussignals
- 700: Beenden des Ladevorgangs

## Patentansprüche

1. Kraftfahrzeug (3) umfassend
a. einen elektrisch betätigbaren Türschließmechanismus (4),
b. einen Signalempfänger (6) zum funkbasierten Empfangen eines Zugangsberechtigungscodes von einem Signalgeber (1), und
c. mindestens eine Steuereinheit (7) zur Auswertung des empfangenen Zugangsberechtigungscodes und zur Erzeugung von Steuersignalen für den Türschließmechanismus (4),
**dadurch gekennzeichnet, dass**
a. eine von außerhalb des Kraftfahrzeuges zugängliche Ladeeinrichtung zum elektrischen Laden des Signalgebers (1) vorhanden ist, und
b. die mindestens eine Steuereinheit (7) eingerichtet ist, in einem verschlossenen Zustand des Kraftfahrzeuges (3) eine Steuerung der im Rahmen des Ladevorgangs über die Ladeeinrichtung von dem Bordnetz des Kraftfahrzeuges (3) an den Signalgeber übertragenen Energiemenge vorzunehmen, wobei die mindestens eine Steuereinheit (7)
• die Entnahme an elektrischer Energie bis zum Erreichen eines für das Öffnen des Kraftfahrzeuges (3) ausreichenden Ladestandes des Signalgebers (1) und/oder
• die in einem Ladevorgang entnehmbare Energiemenge sowie die Wartezeit zwischen Ladevorgängen steuert.

2. Kraftfahrzeug (3) nach Anspruch 1, **dadurch gekennzeichnet, dass** die Ladeeinrichtung (5) nach dem Funktionsprinzip des induktiven Ladens ausgeführt ist.

3. Kraftfahrzeug (3) nach Anspruch 1, **dadurch gekennzeichnet, dass** die Ladeeinrichtung (5) eine Kabelverbindung zum Anschließen des Signalgebers (1) zur Verfügung stellt.

4. Kraftfahrzeug (3) nach einem der vorhergehenden Ansprüche, **dadurch gekennzeichnet, dass** mit der mindestens einen Steuereinheit (7) eine Autorisierung des Signalgebers (1) zum Laden durchführbar ist.

5. Kraftfahrzeug (3) nach einem der vorhergehenden Ansprüche, **dadurch gekennzeichnet, dass** die mindestens eine Steuereinheit (7) eine Begrenzung der zu übertragenden Energiemenge ermöglicht.

6. Kraftfahrzeug (3) nach einem der vorhergehenden Ansprüche, **dadurch gekennzeichnet, dass** mit Hilfe der mindestens einen Steuereinheit (7) eine Ermittlung des Ladezustandes im Bordnetz des Kraftfahrzeuges (3) durchführbar ist und dass bei Unterschreitung eines Grenzwertes des Ladezustandes keine Aktivierung des Ladevorgangs erfolgt oder bei laufendem Ladevorgang dieser beendet wird.

7. Kraftfahrzeug (3) nach einem der vorhergehenden Ansprüche, **dadurch gekennzeichnet, dass** die mindestens eine Steuereinheit (7) zur Ausgabe von Statusinformationen ausgerüstet ist.

8. Verfahren zum Laden eines Signalgebers (1) über die von außerhalb des Kraftfahrtzeugs (3) gemäß der Ansprüche 1-7 zugängliche Ladeeinrichtung zum elektrischen Laden des Signalgebers (1), wobei
a. der Signalgeber (1) elektrisch mit der an dem Kraftfahrzeug (3) befindlichen, von außen zugägnglichen Ladevorrichtung verbunden wird, und
b. gesteuert durch die mindestens eine im Kraftfahrzeug befindliche Steuereinheit (7) in einem verschlossenen Zustand des Kraftfahrzeugs (3) ein Ladevorgang des Signalgebers über die Ladevorrichtung unter der Nutzung der Energie im Bordnetz des Kraftfahrzeugs (3) vorgenommen wird, wobei die mindestens eine Steuereinheit (7)
- die Entnahme an elektrischer Energie bis zum Erreichen eines für das Öffnen des Kraftfahrzeuges (3) ausreichenden Ladestandes des Signalgebers (1) und/oder
- die in einem Ladevorgang entnehmbare Energiemenge sowie die Wartezeit zwischen Ladevorgängen steuert.

9. Verfahren nach Anspruch 8, wobei mittels der Steuereinheit (7) vor dem Start des Ladevorganges eine Autorisierung des Signalgebers (1) zum Laden erfolgt.

10. Verfahren nach einem der Ansprüche 8 oder 9, wobei mittels der Steuereinheit (7) ein Statussignal zur Bestätigung einer erfolgreichen Autorisierung des Signalgebers ausgegeben wird.

11. Verfahren nach einem der Ansprüche 8 bis 10, wobei mittels der Steuereinheit (7) eine Prüfung der Bordnetzspannung des Kraftfahrzeuges durchgeführt wird.

12. Verfahren nach einem der Ansprüche 8 bis 11, wobei mittels der Steuereinheit (7) die übertragene Energiemenge während des Ladevorgangs gesteuert wird.

13. Verfahren nach einem der Ansprüche 8 bis 12, wobei mittels der Steuereinheit (7) ein Signal zur Bestätigung des Ladevorgangsendes ausgegeben wird.

14. Verfahren nach einem der Ansprüche 8 bis 13, wobei das elektrische Laden des Signalgebers (1) mit Hilfe der Ladeeinrichtung (5) nach dem Prinzip der Induktion erfolgt.

15. Verfahren nach einem der Ansprüche 8 bis 13, wobei das elektrische Laden des Signalgebers (1) mit Hilfe der Ladeeinrichtung und eines Kabels (9) erfolgt.

## Claims

1. Motor vehicle (3) comprising
a. an electrically actuatable door closing mechanism (4),
b. a signal receiver (6) for the radio-based reception of an access authorization code from a signal transmitter (1), and
c. at least one control unit (7) for evaluating the received access authorization code and for generating control signals for the door closing mechanism (4),
**characterized in that**
a. a charging device accessible from outside the motor vehicle is present for electrically charging the signal transmitter (1), and
b. the at least one control unit (7) is configured to, in a closed state of the motor vehicle (3), control the amount of energy transmitted from the vehicle electrical system of the motor vehicle (3) to the signal transmitter via the charging device within the framework of the charging process, wherein the at least one control unit (7)
• controls the drawing of electrical energy until the signal transmitter (1) has reached a charge level sufficient to open the motor vehicle (3), and/or
• controls the amount of energy that can be drawn in one charging process and the waiting time between charging processes.

2. Motor vehicle (3) according to claim 1, **characterized in that** the charging device (5) is designed according to the functional principle of inductive charging.

3. Motor vehicle (3) according to claim 1, **characterized in that** the charging device (5) provides a cable connection for connecting the signal transmitter (1).

4. Motor vehicle (3) according to one of the preceding claims, **characterized in that** authorization of the signal transmitter (1) to charge can be carried out with the at least one control unit (7).

5. Motor vehicle (3) according to one of the preceding claims, **characterized in that** the at least one control unit (7) enables limitation of the amount of energy to be transmitted.

6. Motor vehicle (3) according to one of the preceding claims, **characterized in that** determination of the charging state in the vehicle electrical system of the motor vehicle (3) can be carried out with the aid of the at least one control unit (7), and **in that**, if the charging state is below a limit value, the charging process is not activated or is terminated if a charging process is running.

7. Motor vehicle (3) according to one of the preceding claims, **characterized in that** the at least one control unit (7) is equipped to output status information.

8. Method for charging a signal transmitter (1) via the charging device, accessible from outside the motor vehicle (3) in accordance with claims 1-7, for electrically charging the signal transmitter (1), wherein
a. the signal transmitter (1) is electrically connected to the charging device that is located on the motor vehicle (3) and is accessible from outside, and
b. in a closed state of the motor vehicle (3), a charging process of the signal transmitter is carried out, in a manner controlled by the at least one control unit (7) located in the motor vehicle, via the charging device using the energy in the vehicle electrical system of the motor vehicle (3), wherein the at least one control unit (7)
- controls the drawing of electrical energy until the signal transmitter (1) has reached a charge level sufficient to open the motor vehicle (3), and/or
- controls the amount of energy that can be drawn in one charging process and the waiting time between charging processes.

9. Method according to claim 8, wherein, prior to the start of the charging process, authorization of the signal transmitter (1) to charge takes place by means of the control unit (7).

10. Method according to one of claims 8 or 9, wherein a status signal is output by means of the control unit (7) to confirm successful authorization of the signal transmitter.

11. Method according to one of claims 8 to 10, wherein a test of the vehicle electrical system voltage of the motor vehicle is carried out by means of the control unit (7).

12. Method according to one of claims 8 to 11, wherein the amount of energy transmitted during the charging process is controlled by means of the control unit (7).

13. Method according to one of claims 8 to 12, wherein a signal is output by means of the control unit (7) to confirm the end of the charging process.

14. Method according to one of claims 8 to 13, wherein the electrical charging of the signal transmitter (1) with the aid of the charging device (5) takes place according to the principle of induction.

15. Method according to one of claims 8 to 13, wherein the electrical charging of the signal transmitter (1) takes place with the aid of the charging device and a cable (9).

## Revendications

1. Véhicule automobile (3) comprenant
a. un mécanisme de fermeture de porte (4) pouvant être actionné électriquement,
b. un récepteur de signaux (6) pour la réception basée sur la transmission radio d'un code d'autorisation d'accès à partir d'un générateur de signaux (1) et
c. au moins une unité de commande (7) pour l'évaluation du code d'autorisation d'accès reçu et pour la génération de signaux de commande pour le mécanisme de fermeture de porte (4),
**caractérisé en ce que**
a. un dispositif de chargement pour le chargement électrique du générateur de signaux (1) accessible à partir de l'extérieur du véhicule automobile est présent et
b. l'au moins une unité de commande (7) est conçue pour effectuer, dans un état fermé du véhicule automobile (3), un contrôle de la quantité d'énergie transmise par le biais du dispositif de chargement du réseau de bord du véhicule automobile (3) au générateur de signaux, dans le cadre du processus de chargement, l'au moins une unité de commande (7) contrôlant
• l'extraction d'énergie électrique jusqu'à l'atteinte d'un état de charge du générateur de signaux (1) suffisant pour l'ouverture du véhicule automobile (3) et/ou
• la quantité d'énergie pouvant être extraite durant un processus de chargement, ainsi que le temps d'attente entre processus de chargement.

2. Véhicule automobile (3) selon la revendication 1, **caractérisé en ce que** le dispositif de chargement (5) est réalisé selon le principe de fonctionnement du chargement par induction.

3. Véhicule automobile (3) selon la revendication 1, **caractérisé en ce que** le dispositif de chargement (5) fournit une connexion filaire pour le raccordement du générateur de signaux (1).

4. Véhicule automobile (3) selon l'une quelconque des revendications précédentes, **caractérisé en ce qu'**une autorisation du générateur de signaux (1) pour le chargement peut être effectuée au moyen de l'au moins une unité de commande (7).

5. Véhicule automobile (3) selon l'une quelconque des revendications précédentes, **caractérisé en ce que** l'au moins une unité de commande (7) permet de limiter la quantité d'énergie à transmettre.

6. Véhicule automobile (3) selon l'une quelconque des revendications précédentes, **caractérisé en ce qu'**une détermination de l'état de charge peut être effectuée dans le réseau de bord du véhicule automobile (3) au moyen de l'au moins une unité de commande (7) et qu'en dessous d'une valeur limite de l'état de charge, l'activation du processus de chargement n'est pas effectuée ou, en cas de processus de chargement en cours, celui-ci est interrompu.

7. Véhicule automobile (3) selon l'une quelconque des revendications précédentes, **caractérisé en ce que** l'au moins une unité de commande (7) est équipée pour la sortie d'informations d'état.

8. Procédé de chargement d'un générateur de signaux (1) par le dispositif de chargement pour le chargement électrique du générateur de signaux (1) accessible depuis l'extérieur du véhicule automobile (3) selon les revendications 1 à 7, dans lequel
a. le générateur de signaux (1) est connecté électriquement au dispositif de chargement accessible depuis l'extérieur se trouvant sur le véhicule automobile (3) et
b. un processus de chargement du générateur de signaux, contrôlé par l'au moins une unité de commande (7) se trouvant dans le véhicule automobile, est réalisé dans un état fermé du véhicule automobile (3) par le dispositif de chargement en utilisant l'énergie présente dans le réseau de bord du véhicule automobile (3), l'au moins une unité de commande (7) contrôlant
- l'extraction d'énergie électrique jusqu'à l'atteinte d'un état de charge du générateur de signaux (1) suffisant pour l'ouverture du véhicule automobile (3) et/ou
- la quantité d'énergie pouvant être extraite durant un processus de chargement, ainsi que le temps d'attente entre processus de chargement.

9. Procédé selon la revendication 8, dans lequel une autorisation du générateur de signaux (1) pour le chargement est effectuée au moyen de l'unité de commande (7) avant le début du processus de chargement.

10. Procédé selon l'une quelconque des revendications 8 ou 9, dans lequel un signal d'état de confirmation de l'autorisation réussie du générateur de signaux est émis au moyen de l'unité de commande (7).

11. Procédé selon l'une quelconque des revendications 8 à 10, dans lequel une vérification de la tension du réseau de bord du véhicule automobile est effectuée au moyen de l'unité de commande (7).

12. Procédé selon l'une quelconque des revendications 8 à 11, dans lequel la quantité d'énergie transmise durant le processus de chargement est contrôlée au moyen de l'unité de commande (7).

13. Procédé selon l'une quelconque des revendications 8 à 12, dans lequel un signal de confirmation de la fin du processus de chargement est émis au moyen de l'unité de commande (7).

14. Procédé selon l'une quelconque des revendications 8 à 13, dans lequel le chargement électrique du générateur de signaux (1) est effectué à l'aide du dispositif de chargement (5) selon le principe de l'induction.

15. Procédé selon l'une quelconque des revendications 8 à 13, dans lequel le chargement électrique du générateur de signaux (1) est effectué à l'aide du dispositif de chargement et d'un câble (9).
